# FASCICULE DE BREVET EUROPEEN

(11) **EP 1 825 642 B1**
(45) Date de publication et mention de la délivrance du brevet: **20.12.2017**
(21) Numéro de dépôt: 05816254.6
(22) Date de dépôt: 30.11.2005
(51) Int. Cl.: H04L 12/70

(54) **SYSTÈME DE ROUTAGE MULTIPLE-TOPOLOGIE ET MULTIPLE-SERVICES**
MEHRFACH-TOPOLOGIE UND MEHRFACH-DIENST-ROUTING-SYSTEM
MULTI-TOPOLOGY AND MULTI-SERVICE ROUTING SYSTEM

(30) Priorité: 30.11.2004 FR 0412691
(43) Date de publication de la demande: 29.08.2007
(73) Titulaire: THALES, 92400 Courbevoie (FR)
(72) Inventeur: GOURLAOUEN, Denis, F-92250 LA GARENNE COLOMBES (FR); SCHUTZ, Roland, F-91940 GOMETZ LE CHATEL (FR)
(74) Mandataire: Dudouit, Isabelle
(86) Numéro de dépôt international: PCT/EP2005/056349
(87) Numéro de publication internationale: WO 2006/058888

(56) Documents cités:
- WO-A-00/74312
- US-A1- 2003 105 865
- XIAOHUI GU ET AL: "QoS-assured service composition in managed service overlay networks" PROCEEDINGS OF THE 23RD. INTERNATIONAL CONFERENCE ON DISTRIBUTED COMPUTING SYSTEMS. ICDCS 2003. PROVIDENCE, RI, MAY 19 - 22, 2003, INTERNATIONAL CONFERENCE ON DISTRIBUTED COMPUTING SYSTEMS, LOS ALAMITOS, CA : IEEE COMP. SOC, US, vol. CONF. 23, 19 mai 2003 (2003-05-19), pages 194-201, XP010642287 ISBN: 0-7695-1920-2
- JIN , NAHRSTEDT: "On Construction of Service Multicast Trees" ICC 03 IEEE CONFERENCE, vol. 2, 11 mai 2003 (2003-05-11), - 15 mai 2003 (2003-05-15) XP002333317
- JINGWEN JIN ET AL: "QoS service routing in one-to-one and one-to-many scenarios in next-generation service-oriented networks" PERFORMANCE, COMPUTING, AND COMMUNICATIONS, 2004 IEEE INTERNATIONAL CONFERENCE ON PHOENIX, AZ APRIL 15-17, 2004, PISCATAWAY, NJ, USA,IEEE, 15 avril 2004 (2004-04-15), pages 503-510, XP010725635 ISBN: 0-7803-8396-6

## Description

La présente invention concerne un système de routage multiple-topologie et multiple-services.

Le système est développé pour fonctionner sur différents types de sous-réseaux de transport (IP, radio,..) et pour interconnecter les services fonctionnant sur ces sous-réseaux, dans un cadre de mobilité des utilisateurs et des noeuds formant les réseaux de services.

De nombreux protocoles de routage dynamique ont été développés par le passé pour différents types de commutateurs existant (commutateur de circuits, commutateur de paquets ou cellules en mode connecté, routeur, etc....). Ces protocoles de routage sont systématiquement dédiés à un seul type de réseau et sont partie intégrante de la technologie développée pour un réseau donné. Ces protocoles décrivent soit des mécanismes de routage internes à un réseau, soit des mécanismes de routage entre réseaux de même nature.

Actuellement, les développements dans ce domaine portent sur des systèmes basés sur: le routage multi-topologie permettant d'instancier les mécanismes de routage d'une même technologie pour des topologies différentes, le routage tenant compte de la qualité de service et des réservations de ressources, du routage sur les réseaux mobiles (Adhoc, etc...).

Les protocoles de routage connus de l'art antérieur sont généralement incomplets et ne prennent pas en compte certaines spécificités des réseaux, telles que la mobilité, l'optimisation des ressources disponibles, etc. Certaines études connues de l'art antérieur ont notamment porté sur la mobilité des adresses de niveau réseau (mobile IP, mobilité dans IPV6.....) et ont conduit à des solutions nécessitant la mise en place de tunnels pouvant créer des boucles de flux inefficaces sur les réseaux ayant des segments contraints.

Le document de Xiaohui Gu et al, intitulé « QoS-assured service composition in managed overlay networks », XP010642287, 19 mai 2003, pages 194-201, traite du multicast dans les réseaux de services et développe des algorithmes optimaux permettant de construire des chemins pour distribuer des flux de données, sous des contraintes de qualité de service QoS.

Néanmoins les protocoles ne tiennent pas compte du routage dynamique requis au niveau service, adressant au travers d'un même protocole de routage divers services pouvant avoir une topologie différente. Ils ne prennent pas en compte la distribution de flux multidestinataire au travers d'un arbre de distribution élaboré dynamiquement de façon distribué pour chaque instance de flux. Ces mécanismes ne traitent pas des problèmes d'interconnexion de services portés sur des réseaux de nature différente.

Le système de routage selon l'invention traite notamment de la mobilité des utilisateurs et des serveurs, de la distribution des flux multidestinataires au travers d'arbres de distribution élaborés dynamiquement selon la liste de distribution, de la localisation des utilisateurs et de la topologie instantanée des réseaux supports. Il répond notamment aux questions suivantes : sur quels serveurs les destinataires sont-ils joignables (mobilité des utilisateurs) et comment acheminer la communication depuis le serveur source vers le ou les serveurs destinataires.

L'invention concerne un système multiple-topologie et multiple services de routage de flux entre plusieurs noeuds, Ni, composant un réseau et comportant plusieurs points d'accès et de relayage service xSVi, une ou plusieurs passerelles de transfert xTGi adaptées pour permettre l'adaptation des flux à transférer aux capacités d'un sous-réseau, un ou plusieurs modules de routage LOCi qui, sur information de routage reçue d'un autre LOCi est adapté à déterminer les itinéraires réels utilisés pour propager le flux au travers du réseau, à tenir à jour une base de données d'information d'expédition distincte par service et à contenir un répertoire d'emplacement où un utilisateur s'est précédemment fait inscrire, le répertoire étant distribué dans chaque unité autonome du réseau, chacun desdits LOCi étant adapté pour être connecté, pour un service donné, au travers d'un groupe de noeuds de service, SNGi, aux autres modules de routage LOCi, un groupe de noeuds de service, SNGi, étant adapté à diffuser une information reçue par un module de routage LOCi à tous les LOCi connectés sur ce groupe de noeuds de service, le flux étant émis par une source et étant destiné à une ou plusieurs destinations en tenant compte des contraintes de mobilité des utilisateurs et des noeuds du réseau, la localisation des utilisateurs présents dans le réseau, des informations d'accessibilité et de topologie portant sur tous les liens existants entre les modules de service xSVi des différents services,
le système de routage comportant en outre un module LOCi associé à chaque xSVi dudit système de routage, ledit module xSVi interrogeant le module LOCi associé au xSVi afin d'acheminer un flux vers un ou plusieurs noeuds Ni dudit réseau,
ledit LOCi étant adapté pour fournir lors de chacune des requêtes dudit xSVi pour chacune des destinations du flux, le bond suivant de relayage xSVi de l'information et le couple de xTG, passerelle d'entrée et passerelle de sortie à utiliser pour joindre ce prochain bond.

L'invention concerne aussi un procédé de routage multiple-topologie et multiple services entre plusieurs noeuds, Ni, composant un réseau et comportant plusieurs points d'accès et de relayage service xSVi, une ou plusieurs passerelles de transfert xTGi adaptées permettant l'adaptation des flux à transférer aux capacités d'un sous-réseau, un ou plusieurs modules de routage LOCi déterminant, sur information de routage reçue d'un autre LOCi, les itinéraires réels utilisés pour propager le flux au travers du réseau, tenant à jour une base de données d'information d'expédition distincte par service et contenant un répertoire d'emplacement où un utilisateur s'est précédemment fait inscrire, le répertoire étant distribué dans chaque unité autonome du réseau, chacun desdits LOCi étant connecté, pour un service donné, au travers d'un groupe de noeuds de service, SNGi, aux autres modules de routage LOCi, un groupe de noeuds de service, SNGi, diffusant une information reçue par un module de routage LOCi à tous les LOCi connectés sur ce groupe de noeuds de service, le flux étant émis par une source et étant destiné à une ou plusieurs destinations en tenant compte des contraintes de mobilité des utilisateurs et des noeuds du réseau, de la localisation des utilisateurs présents dans le réseau, des informations d'accessibilité et de topologie portant sur tous les liens existants entre les modules de service xSVi des différents services, le procédé associant en outre un module LOCi à chaque xSVi, ledit module xSVi interrogeant le module LOCi associé au xSVi afin d'acheminer un flux vers un ou plusieurs noeuds Ni dudit réseau, ledit LOCi fournissant lors de chacune des requêtes dudit xSVi pour chacune des destinations du flux, le bond suivant de relayage xSVi de l'information et le couple de xTG, passerelle d'entrée et passerelle de sortie à utiliser pour joindre ce prochain bond.

Le système et le procédé, objets de l'invention, présentent notamment comme particularité de fonctionner au niveau service.

L'invention traite notamment les fonctions suivantes : le traitement de la localisation des utilisateurs des services et la communication des informations de localisation à tous les noeuds du réseau, la prise en compte des diverses topologies associées à la présence des noeuds de commutation de services (téléphonie, messagerie, distribution de contenu,..), l'élaboration de la route entre une source et une ou plusieurs destinations en tenant compte de la liste de distribution et de la topologie instantanée du système, et de la localisation des utilisateurs.

Le procédé de routage permet d'utiliser efficacement les réseaux dont certaines artères principales sont contraintes en débit (par exemple les liens satellite, les liens très haute fréquence ou VHF (Very High Frequency), les liens ultra haute fréquence ou UHF (Ultra High Frequency)) ; la liste de distribution d'un contenu ou d'un message est pris en compte, le transfert du contenu à distribuer ne sera fait qu'une seule fois sur les artères contraintes.

Il définit un protocole de routage et de localisation partagé par tous les services. Ceci a pour conséquence d'éviter le développement d'un protocole pour chaque service. Au moyen de ce protocole on établit une connectivité de bout en bout au niveau service via des sous-réseaux supports de nature différente.

Le protocole ainsi développé offre une vision de gestion de la connectivité au niveau des services, qui est inexistante dans les implémentations actuelles.

D'autres caractéristiques et avantages de la présente invention apparaîtront mieux à la lecture de la description qui suit d'un exemple de réalisation donné à titre illustratif et nullement limitatif annexé des figures qui représentent :
- La figure 1 un exemple de services ayant des topologies différentes, par exemple le service de la téléphonie et le service de la messagerie,
- La figure 2 un exemple d'architecture pour le routage des flux selon l'invention,
- La figure 3 un exemple d'interconnexion des composants LOC via des groupes de service,
- La figure 4 un exemple de décomposition d'un domaine de mobilité.

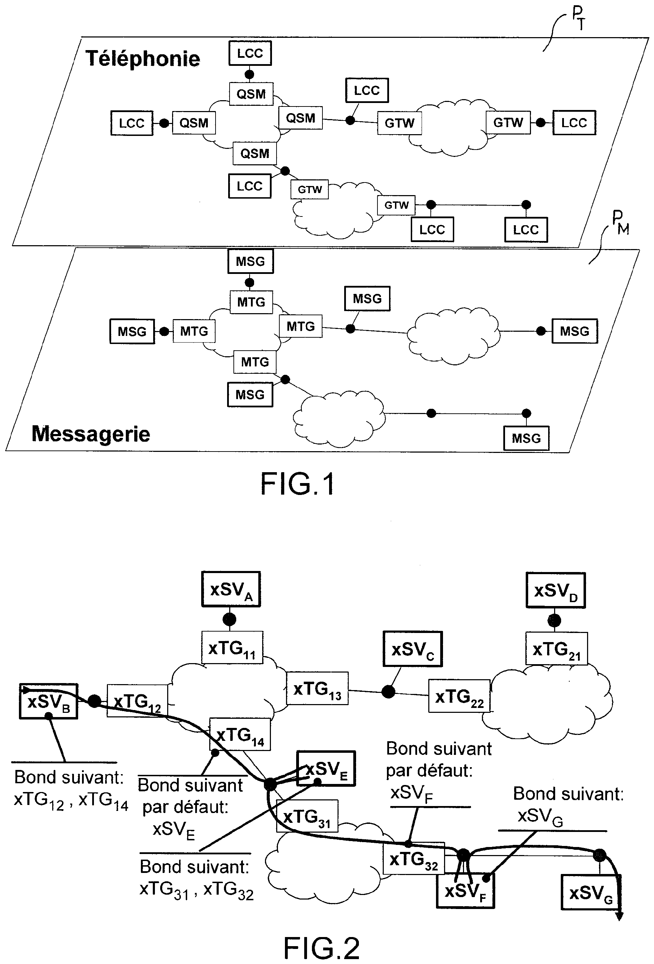

La figure 1 montre la différence de topologies d'interconnexion des plans services pouvant exister pour deux services donnés; par exemple pour le service de téléphonie et pour le service de la messagerie. Les passerelles de transfert sont spécifiques pour un service donné.

Pour la téléphonie, le plan service P_{T} comporte par exemple plusieurs modules LCC ayant notamment pour fonction de contrôler les communications et le multimédia, des modules GTW ayant pour fonction d'assurer l'interconnexion des services phonies avec des services phonies d'autres réseaux, des composants QSM qui traitent la gestion de la qualité de service sur les artères du coeur de réseau. Les modules LCC sont par exemple considérés comme la plate-forme applicative pour les systèmes de téléphonie en vue de la fourniture de services et de téléphonie évolués.

Pour la messagerie, le plan service P_{M} comprend par exemple plusieurs composants MTG ayant pour fonction de spécifier les adaptations fonctionnelles requises pour le transport de messages sur un réseau autre, des composants MSG en charge du système de messagerie.

La figure 2 schématise un exemple de système de routage de flux selon l'invention entre plusieurs noeuds Ni. Le système comporte plusieurs points d'accès et de relayage de service, xSVi, des passerelles de transfert, xTGi permettant l'adaptation des flux à transférer aux capacités du sous-réseau. Un module adapté à traiter le routage pour l'ensemble de services, dénommé LOCi est associé à chaque xSVi du système de routage. Lorsqu'un module de service, xSVi, souhaite acheminer un flux vers une ou plusieurs destinations (un ou plusieurs noeuds du réseau), il interroge le module LOCi local associé au xSVi qui fournit l'information d'étape suivante ou next-hop (flux acheminé de xSVB vers xSVG) et éventuellement les informations sur les passerelles de transfert xTG à utiliser. Lors de chacune des requêtes du xSV la fonction LOC (réalisée par exemple sous forme de composant offrant des services) donne pour chaque destination du flux : le bond suivant de relayage (xSVi) de l'information et le couple de xTG (la première est la passerelle d'entrée sur le réseau traversé et la deuxième est la passerelle de sortie) à utiliser pour joindre ce prochain bond.

Un module xSV regroupe les fonctions de relayage et de point d'accès (par exemple le module xSV peut inclure une boîte aux lettres dans le cas d'une messagerie).

Le module LOC contient par exemple un répertoire d'emplacement où l'utilisateur s'est précédemment fait inscrire, ici le répertoire est par exemple distribué dans chaque unité autonome du réseau.

Pour élaborer l'arbre de distribution associé à un flux entre une source et plusieurs destinations en tenant compte des contraintes de mobilité des utilisateurs et des noeuds du réseau, les fonctions LOC (Localisation et routage) s'échangent les informations suivantes : la localisation des utilisateurs présents dans le réseau, des informations d'accessibilité et de topologie portant sur tous les liens existants entre les modules de service xSV des différents services.

Pour propager l'information dont ils disposent, les serveurs LOCi sont interconnectés de la manière suivante : l'interconnexion des serveurs LOC s'effectue pour un service donné au travers d'un SNG (groupement de LOC qui sont en visibilité directe qui représente un réseau donné au niveau service ou en anglo-saxon, service node group) ayant notamment pour fonction de diffuser une information reçue par tous les LOC connectés sur ce groupe de noeud de service. Un même serveur LOC peut faire partie de plusieurs SNG. Une information transmise par un serveur LOC dans un SNG est reçue par tous les LOC connectés sur ce SNG.

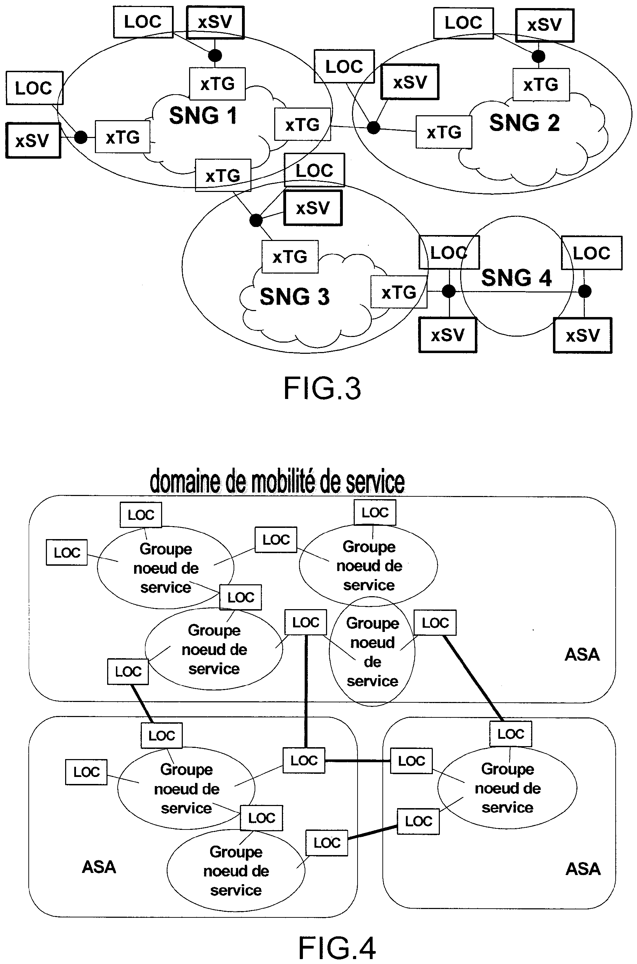

La figure 3 schématise un exemple d'organisation en groupe de noeud de service « SNG » de l'interconnexion de réseau, présenté en figure 2.

L'information ainsi propagée par les SNG permet à chaque composant LOC connecté, d'élaborer, pour un service donné, la table d'acheminement des informations qui est exploitée par les requêtes émises par les modules de service xSV. Ceci est effectué au moyen d'algorithmes connus par exemple de type Vecteur de Distance ou Etat de Liens.

L'invention est par exemple utilisée pour la mise en place d'une structure en domaines permettant de limiter le nombre d'informations de routage échangées et de contrôler les flux entrant et sortant d'un réseau donné.

Une telle structure présente notamment l'avantage de définir le domaine de mobilité des utilisateurs et les zones dans lesquelles les serveurs ou point d'accès xSV peuvent se déplacer.

Un domaine de mobilité d'utilisateurs est composé par exemple de différents types de réseaux (réseau d'infrastructure, réseau radio haut débit, réseau radio bas débit, etc.) ou de réseaux contrôlés par des responsabilités administratives différentes. Ces réseaux constituent en fait des zones de service autonomes ou ASA.

La figure 4 représente un exemple de décomposition d'un domaine de mobilité, sur lequel les utilisateurs des services peuvent se déplacer en plusieurs zones de services autonomes ASA. Un ensemble de point d'accès ou relais de service (xSV) peut être déplacé avec la fonction LOC qui y est attachée sans entraîner de reconfiguration par administration au sein d'un ASA.

Les LOC interconnectés par des SNG forment une zone de service autonome ASA, au sein de laquelle les fonctions LOC peuvent se déplacer avec les xSV qui y sont attachés. Les accessibilités et la topologie au sein d'une même zone ASA sont connus de tous les LOC d'un même ASA. Les liaisons entre ASA ne propagent pas les accessibilités internes aux ASA, mais ne propagent vers les zones ASA adjacentes que l'accessibilité des ASA et de ce fait limitent le volume d'informations de routage échangées sur le réseau. Ces solutions sont similaires à celles développées pour les réseaux de paquets, mais elles ont été appliquées aux topologies formées par des réseaux au niveau interconnexion des serveurs fournissant le service.

Un réseau externe est considéré comme une zone autonome « ASA » par le système de routage selon l'invention.

Les exemples de réalisation décrits précédemment adressent la gestion dynamique des topologies formées par des réseaux de service. Elles adressent les réseaux sur lesquels une gestion distribuée de la mobilité est requise (mobilité des noeuds de service, et mobilité des utilisateurs des services).

L'invention s'applique notamment sur les réseaux dont certaines artères principales sont contraintes en débit (satellite, faisceau hertzien, artères de réseau Adhoc, ...), car elle permet de prendre en compte la liste de distribution d'un contenu ou d'un message et permet d'assurer que le transfert du contenu à distribuer ne sera fait qu'une seule fois sur les artères contraintes.

L'invention permet aussi de créer une connectivité de bout en bout pour le service, même si les sous-réseaux supports sont de nature hétérogène.

## Revendications

1. Système multiple-topologie et multiple services de routage de flux entre plusieurs noeuds, Ni, composant un réseau et comportant plusieurs points d'accès et de relayage service xSVi, une ou plusieurs passerelles de transfert xTGi adaptées pour permettre l'adaptation des flux à transférer aux capacités d'un sous-réseau, un ou plusieurs modules de routage LOCi qui, sur information de routage reçue d'un autre LOCi est adapté à déterminer les itinéraires réels utilisés pour propager le flux au travers du réseau, à tenir à jour une base de données d'information d'expédition distincte par service et à contenir un répertoire d'emplacement où un utilisateur s'est précédemment fait inscrire, le répertoire étant distribué dans chaque unité autonome du réseau, chacun desdits LOCi étant adapté pour être connecté, pour un service donné, au travers d'un groupe de noeuds de service, SNGi, aux autres modules de routage LOCi, un groupe de noeuds de service, SNGi, étant adapté à diffuser une information reçue par un module de routage LOCi à tous les LOCi connectés sur ce groupe de noeuds de service, le flux étant émis par une source et étant destiné à une ou plusieurs destinations en tenant compte des contraintes de mobilité des utilisateurs et des noeuds du réseau, la localisation des utilisateurs présents dans le réseau, des informations d'accessibilité et de topologie portant sur tous les liens existants entre les modules de service xSVi des différents services,
• le système de routage comportant en outre un module LOCi associé à chaque xSVi dudit système de routage, ledit module xSVi interrogeant le module LOCi associé au xSVi afin d'acheminer un flux vers un ou plusieurs noeuds Ni dudit réseau,
• ledit LOCi étant adapté pour fournir lors de chacune des requêtes dudit xSVi pour chacune des destinations du flux, le bond suivant de relayage xSVi de l'information et le couple de xTG, passerelle d'entrée et passerelle de sortie à utiliser pour joindre ce prochain bond.

2. Procédé de routage multiple-topologie et multiple services destiné à fonctionner sur un réseau de routage selon la revendication 1 comprenant plusieurs noeuds, Ni, composant un réseau et comportant plusieurs points d'accès et de relayage service xSVi, une ou plusieurs passerelles de transfert xTGi adaptées permettant l'adaptation des flux à transférer aux capacités d'un sous-réseau, un ou plusieurs modules de routage LOCi déterminant, sur information de routage reçue d'un autre LOCi, les itinéraires réels utilisés pour propager le flux au travers du réseau, tenant à jour une base de données d'information d'expédition distincte par service et contenant un répertoire d'emplacement où un utilisateur s'est précédemment fait inscrire, le répertoire étant distribué dans chaque unité autonome du réseau, chacun desdits LOCi étant connecté, pour un service donné, au travers d'un groupe de noeuds de service, SNGi, aux autres modules de routage LOCi, un groupe de noeuds de service, SNGi, diffusant une information reçue par un module de routage LOCi à tous les LOCi connectés sur ce groupe de noeuds de service, le flux étant émis par une source et étant destiné à une ou plusieurs destinations en tenant compte des contraintes de mobilité des utilisateurs et des noeuds du réseau, la localisation des utilisateurs présents dans le réseau, des informations d'accessibilité et de topologie portant sur tous les liens existants entre les modules de service xSVi des différents services, le procédé associant en outre un module local LOCi associé à chaque xSVi, ledit module xSVi interogeant le module LOCi au xSVi afin d'acheminer un flux vers un ou plusieurs noeuds Ni dudit réseau, ledit LOCi fournissant lors de chacune des requêtes dudit xSVi pour chacune des destinations du flux, le bond suivant de relayage xSVi de l'information et le couple de xTG, passerelle d'entrée et passerelle de sortie à utiliser pour joindre ce prochain bond.

## Patentansprüche

1. Mehrfach-Topologie- und Mehrfach-Dienste-System des Routings von Strömen zwischen mehreren Knoten, Ni, die ein Netzwerk bilden und mehrere xSVi-Zugangs- und Weiterleitungsdienst-Punkte, ein oder mehrere xTGi-Transfer-Gateways, die angepasst sind, um die Anpassung der an die Kapazitäten eines Teilnetzwerks zu übertragenden Ströme zu ermöglichen, ein oder mehrere LOCi-Routingmodule, die auf Grundlage von Routing-Informationen, die von einem anderen LOCi empfangen wurden, angepasst sind, um die realen Routen zu bestimmen, die zur Ausbreitung des Stroms durch das Netzwerk verwendet werden, um eine nach Dienst unterschiedene Datenbank für Versandinformationen auf dem Laufenden zu halten und ein Anordnungsverzeichnis zu beinhalten, in das sich ein Benutzer zuvor eintragen hat lassen, beinhalten, wobei das Verzeichnis in jeder autonomen Netzwerkeinheit verteilt wird, wobei jeder der LOCi angepasst ist, um für einen bestimmten Dienst über eine Gruppe von Dienstknoten, SNGi, an die anderen LOCi-Routingmodule angeschlossen zu werden, wobei eine Gruppe von Dienstknoten, SNGi, angepasst ist, um eine durch ein LOCi-Routingmodul erhaltene Information an alle LOCi zu verteilen, die mit dieser Gruppe von Dienstknoten verbunden sind, wobei der Strom von einer Quelle ausgesendet wird und für einen oder mehrere Bestimmungsorte unter Berücksichtigung der Einschränkungen der Mobilität der Benutzer und der Knoten des Netzwerks, der Ortsbestimmung der im Netzwerk vorhandenen Benutzer, von Informationen des Zugangs und der Topologie, die sich auf alle bestehenden Verbindungen zwischen den xSVi-Dienstmodulen der verschiedenen Dienste belaufen, bestimmt ist,
• wobei das Routingsystem außerdem ein LOCi-Modul umfasst, das mit jeder xSVi des Routingsystems verbunden ist, wobei das xSVi-Modul das LOCi-Modul abfragt, das mit dem xSVi verbunden ist, um einen Strom zu einem oder mehreren Ni-Knoten des Netzwerks zu leiten,
• wobei der LOCi angepasst ist, um anlässlich jeder der Anfragen des xSVi für jeden der Bestimmungsorte des Stroms den nächsten Sprung der xSVi-Weiterleitung der Information und das Paar der xTG zu liefern, das zu verwendende Input- und Output-Gateway, um diesen nächsten Sprung zu erreichen.

2. Routingverfahren für Mehrfach-Topologie und Mehrfach-Dienste, das bestimmt ist, auf einem Routingnetzwerk nach Anspruch 1 zu funktionieren, das Folgendes umfasst: mehrere Knoten, Ni, die ein Netzwerk bilden und mehrere xSVi-Zugangs- und Weiterleitungsdienstpunkte, ein oder mehrere angepasste xTGi-Transfer-Gateways, die die Anpassung der an die Kapazitäten eines Teilnetzwerks zu übertragenden Ströme ermöglichen, ein oder mehrere LOCi-Routingmodule, die auf Grundlage von Routing-Informationen, die von einem anderen LOCi empfangen wurden, die realen Routen bestimmen, die zur Ausbreitung des Stroms durch das Netzwerk verwendet werden, eine nach Dienst unterschiedene Datenbank für Versandinformationen auf dem Laufenden halten und ein Standortverzeichnis zu beinhalten, in das sich ein Benutzer zuvor hat eintragen lassen, beinhalten, wobei das Verzeichnis in jeder autonomen Netzwerkeinheit verteilt ist, wobei jeder der LOCi für einen bestimmten Dienst über eine Gruppe von Dienstknoten, SNGi, mit den anderen LOCi-Routingmodulen verbunden ist, wobei eine Gruppe von Dienstknoten, SNGi, eine durch ein LOCi-Routingmodul erhaltene Information an alle LOCi verteilt, die mit dieser Gruppe von Dienstknoten verbunden ist, wobei der Strom von einer Quelle ausgesendet wird und für einen oder mehrere Bestimmungsorte bestimmt ist unter Berücksichtigung der Einschränkungen der Mobilität der Benutzer und der Knoten des Netzwerks, der Ortsbestimmung der im Netzwerk vorhandenen Benutzer, von Informationen des Zugangs und der Topologie, die sich auf alle bestehenden Verbindungen zwischen den xSVi-Dienstmodulen der verschiedenen Dienste belaufen, wobei das Verfahren außerdem ein lokales LOCi-Modul verbindet, das mit jeder xSVi verbunden ist, wobei das xSVi-Modul das LOCi-Modul bei dem xSVi abfragt, um einen Strom zu einem oder mehreren Ni-Knoten des Netzwerks zu leiten, wobei das LOCi anlässlich jeder der Anfragen des xSVi für jeden der Bestimmungsorte des Stroms den nächsten Sprung der xSVi-Weiterleitung der Information und das Paar der xTG liefert, das zu verwendende Input- und Output-Gateway, um diesen nächsten Sprung zu erreichen.

## Claims

1. A multi-topology and multi-service system for routing a stream between several nodes, Ni, comprising a network, and comprising several xSVi service access and relay points, one or more xTGi transfer gateways, suitable for enabling adaptation of the streams to be transferred to the capacities of a subnetwork, one or more LOCi routing modules, which, on routing information received from another LOCi, is adapted to determine the real itineraries used to propagate the stream across the network, for keeping up to date a database of distinct transmittal information for each service, and for containing a location directory in which a user has previously had himself registered, the directory being distributed in each standalone unit of the network, each of said LOCis being adapted to be connected, for a given service, across a group of service nodes, SNGi, to the other LOCi routing modules, a group of service nodes, SNGi, being adapted to broadcast a piece of information received by a LOCi routing module to all of the LOCis connected on this group of services nodes, the stream being transmitted by a source and being intended for one or more destinations taking account of the mobility constraints of the users and of the network nodes, the location of the users present in the network, the accessibility and topology information relating to all of the links existing between the xSVi service modules of the various services,
• the routing system further comprising an LOCi module associated with each xSVi of said routing system, said xSVi module interrogating the LOCi module associated with the xSVi in order to route a stream to one or more nodes Ni of said network,
• said LOCi being adapted to supply upon each of the requests of said xSVi for each of the stream destinations, the next xSVi relay hop of the information and the pair of xTG, the entrance gateway and exit gateway to be used to reach this next hop.

2. A multi-topology and multi-service routing method intended to function on a routing network according to Claim 1, comprising several nodes, Ni, comprising a network and comprising several xSVi service access and relay points, one or more adapted xTGi transfer gateways for allowing adaptation of the streams to be transferred to the capacities of a subnetwork, one or more LOCi routing modules, which, on routing information received from another LOCi, determine the real itineraries used to propagate the stream across the network, keep up to date a database of distinct transmittal information for each service and contain a location directory in which a user has previously had himself registered, the directory being distributed in each standalone unit of the network, each of said LOCis being connected, for a given service, across a group of service nodes, SNGi, to the other LOCi routing modules, a group of service nodes, SNGi, broadcasting a piece of information received by a LOCi routing module to all of the LOCis connected on this group of service nodes, the stream being transmitted by a source and being intended for one or more destinations taking account of the mobility constraints of the users and of the network nodes, the location of the users present in the network, the accessibility and topology information relating to all of the links existing between the xSVi service modules of the various services, the method furthermore associating a local LOCi module, associated with each xSVi, said xSVi module interrogating the LOCi module at the xSVi in order to route a stream to one or more nodes Ni of said network, said LOCi supplying upon each of the requests of said xSVi, for each destination of the stream, the next xSVi relay hop of the information and the pair of xTG, the entrance gateway and exit gateway to be used to reach this next hop.
